**Europäisches Patentamt**

(19) **European Patent Office**

**Office européen des brevets**

(11) Veröffentlichungsnummer: **0 030 024**
**B1**

(12) **EUROPÄISCHE PATENTSCHRIFT**

(45) Veröffentlichungstag der Patentschrift:
03.07.85

(51) Int. Cl.⁴: **H 01 G 13/00**

(21) Anmeldenummer: **80107464.2**

(22) Anmeldetag: **28.11.80**

(54) **Verfahren zum Anbringen und Befestigen von Stromzuführungsdrähten an elektrischen Bauelementen.**

(30) Priorität: **30.11.79 DE 2948319**

(43) Veröffentlichungstag der Anmeldung:
**10.06.81 Patentblatt 81/23**

(45) Bekanntmachung des Hinweises auf die Patenterteilung:
**03.07.85 Patentblatt 85/27**

(84) Benannte Vertragsstaaten:
**AT FR GB IT**

(56) Entgegenhaltungen:
**DE - A - 2 138 083**
**DE - B - 1 153 807**

(73) Patentinhaber: **Siemens Aktiengesellschaft, Berlin und München Wittelsbacherplatz 2, D-8000 München 2 (DE)**

(84) Benannte Vertragsstaaten: **FR GB IT**

(73) Patentinhaber: **Siemens Bauelemente OHG, Unterlaufenegger Strasse, A-8530 Deutschlandsberg (AT)**

(84) Benannte Vertragsstaaten: **AT**

(72) Erfinder: **Haidinger, Erich, Ulrichsberg 20, D-8530 Deutschlandsberg (AT)**

ACTORUM AG

## Beschreibung

Die Erfindung betrifft ein Verfahren zum Anbringen und Befestigen von parallel zueinander verlaufenden Stromzuführungsdrähten an gegenüber befindlichen Seitenflächen elektrischer Bauelemente, in dem zunächst in einen mit Schlitzen versehenen bandförmigen Transportträger eine automatisch arbeitende Montage-Anlage fortlaufend für je ein Bauelement bestimmte, einstückig in U-Form ausgeführte Stromzuführungsdrähte derart eingeschoben werden, dass die beiden Drahtschenkel und der sie verbindende U-Bogen der U-Form seitlich über den Rand des Transportträgers hinausragen, danach das Bauelement zwischen den Drahtschenkeln eingeklemmt und dann mit ihnen verlötet wird, anschliessend der die beiden Drahtschenkel der U-Form verbindende U-Bogen abgetrennt wird und die Bauelemente mit den Stromzuführungsdrähten geprüft, gegebenenfalls umhüllt und fertiggestellt werden.

In der DE-AS 1 153 807 ist ein Verfahren zum Anbringen von Stromanschlüssen an elektrische Bauelemente beschrieben, bei dem die Ausgestaltung der Stromzuführungen und ihre Befestigung an bandförmigen Trägerstreifen derart vorgenommen wird, dass die herausragenden freien Enden eine Klemmwirkung gewährleisten, die Bauelemente zwischen diese freien Enden durch Klemmwirkung befestigt werden und dann die Stromzuführungen an den Bauelementen elektrisch leitend und mechanisch befestigt werden. Die für ein Bauelement bestimmten Stromzuführungen sind einstückig, z.B. in Haarnadelform ausgebildet.

Dieses Verfahren eignet sich nur zum Anbringen und Befestigen von Stromzuführungsdrähten an elektrische Bauelemente, die scheibenförmig sind und bei denen die Stromzuführungsdrähte an den gegenüberliegenden grossen Seitenflächen befestigt werden.

In der DE-AS 2 138 083 ist ein Verfahren zum Anbringen der Anschlussdrähte eines keramischen Kondensators beschrieben, bei dem ebenfalls U-förmige Drahtstücke an einem Träger befestigt werden und seitlich über den Rand dieses Trägers hinausragen, wobei jedoch das elektrische Bauelement entweder senkrecht zur Ebene der U-förmigen Anschlussdrähte zwischen diese eingesetzt wird oder es werden, falls längs der Anschlussdrähte Knickungen eingebracht sind, die zu einer Überkreuzung der Anschlussdrähte führen, die Bauelemente zwar in der Ebene der U-Form eingeschoben, jedoch in der Richtung der Verschiebung des bandförmigen Transportträgers.

Während beim Einsetzen der Bauelemente zwischen die U-Form senkrecht zu deren Ebene eine sehr genaue Anpassung des Verlaufs der drahtförmigen Stromzuführungen des Bauelementes zu Ausfällen beim Einsetzen führt, erfordert das Einschieben in Richtung parallel zur Verschiebungsrichtung des Transportträgers zusätzliche Massnahmen der automatisch arbeitenden Montage-Anlage beim Öffnen der sich überkreuzenden Teile der Anschlussdrähte.

In der DE-AS 1 162 011 ist ein scheibenförmiges elektrisches Impedanzelement mit Stromzuführungsdrähten und ein Verfahren zum Anbringen von Stromzuführungen an ein solches Element beschrieben, bei dem die Stromzuführungsdrähte dem Umriss der Scheibe folgen, sich bis auf kurzen Abstand nähern und dann zusammen vom Scheibenrand abbiegen, wobei etwa an dieser Stelle ein Isolierring vorgesehen ist, durch den die Drähte hindurchlaufen und in welchem diese Drähte mittels eines Teiles einer die Scheibe allseitig umhüllenden Lackschicht verankert sind.

Bei diesem Verfahren werden zwar die Stromzuführungsdrähte an den gegenüberliegenden schmalen Seiten eines scheibenförmigen Bauelements angebracht, jedoch ist das für diese Art der Anbringung der Stromzuführungsdrähte erforderliche Verfahren nicht mit automatisch arbeitenden Montage-Anlagen durchzuführen, bei denen ein bandförmiger Transportträger verwendet wird.

Der Begriff «elektrische Bauelemente» wird im Rahmen der vorliegenden Erfindung für elektrische Widerstände, z.B. keramische Kaltleiter, elektrische Kondensatoren, insbesondere Vielschicht-Kondensatoren mit einem keramischen Dielektrikum, sowie allgemein für solche elektrische Bauteile benutzt, die einen Körper enthalten, der entweder selbst Teil des elektrischen Bauteils ist (Kondensator, Widerstände, Halbleiter) oder als Trägerplatte für andere elektrische Bauelement dient (z.B. Schichtschaltungen), wobei an diesen Trägerkörper an gegenüberliegenden Seiten je ein Stromzuführungsdraht zu befestigen ist.

Beim Anbringen und Befestigen von Stromzuführungsdrähten an elektrische Bauelemente mittels automatisch arbeitender Montage-Anlagen müssen die einzelnen Arbeitsschritte derart bemessen und aufeinander abgestimmt sein, dass eine hohe Taktzeit der Montage-Anlage ermöglicht wird. Die Taktzeit der Montage-Anlage richtet sich nach dem zeitaufwendigsten bzw. schwierig durchzuführenden Arbeitsschritt.

Während das Formen der einzelnen Anschlussdrähte eines Bauelements zu einer U-Form, das Einsetzen derselben in Schlitze eines Transportträgerbandes, die weitere Verformung dieser Anschlussdrähte, das spätere Verlöten derselben mit den Metallflächen des elektrischen Bauelements, das Prüfen und das Umhüllen mit einer Schutzschicht Arbeitsschritte sind, die eventuell durch mehrfache Unterteilung schnell durchgeführt werden können, bereitet das Einsetzen des elektrischen Bauelements zwischen die Stromzuführungsdrähte und der vorübergehende Halt derselben bis zum Lötvorgang Schwierigkeiten, die dazu führen, dass diese Arbeitsschritte bestimmend für die Gesamttaktzeit der Montage-Anlage sind.

Es kommt hinzu, dass die elektrischen Bauelemente nicht stets konstante äussere Abmessungen aufweisen, so dass das Einsetzen zwischen die Stromzuführungsdrähte für den vorübergehenden Halt Schwierigkeiten beispielsweise insofern bereitet, dass der notwendige vorübergehende Halt nicht gewährleistet ist und es deshalb nicht zu einer elektrisch leitenden und mechanisch festen Verbindung kommt. Wenn die elektrischen Bauelemente, die mit Stromzuführungsdrähten zu versehen sind, aufgrund ihrer elektrischen Erfordernisse unterschiedliche Abmessungen haben, so muss – selbst wenn es sich nur um kleine Unterschiede handelt – stets die Anlage umgestellt werden, was aber insbesondere bei kleineren Stückzahlen zu Stillstandzeiten führt.

Der vorliegenden Erfindung liegt die Aufgabe zugrunde, ein Verfahren zum Anbringen und Befestigen von parallel zueinander verlaufenden Stromzuführungsdrähten an gegenüber befindlichen Seitenflächen elektrischer Bauelemente anzugeben, das eine Erhöhung der Taktzeit ermöglicht, bei dem Schwankungen in den Abmessungen der elektrischen Bauelemente möglich sind und das bei geringer Änderung der Abmessungen eine ggf. umfangreiche Umstellung der jeweiligen Arbeitsschritte der Montage-Anlage nicht erforderlich macht, so dass insgesamt die oben beschriebenen Schwierigkeiten beseitigt sind; die Stromzuführungsdrähte sollen zueinander in einem gewünschten Rastermass, z.B. 2,5 mm, 5 mm, verlaufen.

Zur Lösung dieser Aufgabe ist das Verfahren der eingangs angegebenen Art erfindungsgemäss durch den Verfahrensschritt des Anspruchs 1 gekennzeichnet.

Eine bevorzugte Ausführungsform des Verfahrens der Erfindung sieht folgende Verfahrensschritte vor:

a) Der seitlich über den Rand des Transportträgers hinausragende Teil der U-förmig ausgeführten, parallelen Stromzuführungsdrähte einschliesslich des U-Bogens wird im dem Einschieben in die Schlitze des Transportträgers folgenden Arbeitsschritt derart aufgebogen, dass der Radius des U-Bogens vergrössert wird und die Drahtschenkel zueinander einen sich öffnenden Winkel bilden, so dass eine Schlaufe entsteht.

b) Beim folgenden Arbeitsschritt wird jeder Drahtschenkel im Bereich der Schlaufe mit je zwei Knickungen versehen, so dass die Drahtschenkel im wesentlichen wieder parallel verlaufen, das erste Paar Knickungen etwa in der Nähe des Randes des Transportträgers sich befindet und das zweite Paar Knickungen den Übergang zum U-Bogen bildet.

c) Beim folgenden Verfahrensschritt wird der U-Bogen derart um einen Winkel von etwa 90° abgebogen, dass das zweite Paar Knickungen in seiner bisherigen Ebene verbleibt und auf diese Weise eine in Richtung der Stromzuführungsdrähte sich verjüngende Einschiebehilfe bildet.

d) Beim nächsten Verfahrensschritt werden die Bauelemente zwischen die Drahtschenkel eingeschoben und in an sich bekannter Weise mit ihnen verlötet.

e) Beim folgenden Arbeitsschritt wird der verbindende U-Bogen zusammen mit dem zweiten Paar Knickungen und Teilen der Drahtschenkel in der Nähe des Bauelements abgetrennt.

f) Anschliessend werden die Bauelemente mit den Stromzuführungsdrähten in an sich bekannter Weise geprüft, ggf. umhüllt und fertiggestellt.

Es wird somit bei der Erfindung ein bandförmiger Transportträger benutzt, der mit parallel zueinander verlaufenden Schlitzen versehen ist, in denen aus zwei für je ein Bauelement bestimmter Stromzuführungsdrähte eine U-Form gebildet ist, die im ersten Teil des Trägerbandes in ihrer einfachsten Form vorliegt, die dann zu einer Schlaufe aufgebogen ist, welche im weiteren Verlauf mit Knickungen versehen ist und deren verbindender Teil um einen Winkel von etwa 90° aus der ursprünglichen Ebene abgebogen ist, so dass eine Einschiebehilfe für die Bauelemente vorliegt, die im weiteren Verlauf mit den derartig geformten Stromzuführungsdrähten verlötet sind. Die Erfindung wird nachfolgend anhand der beigefügten Zeichnung einer bevorzugten Ausführungsform erläutert.

Es zeigen:

Fig. 1 den bandförmigen Transportträger, bei dem die einzelnen Arbeitsschritte eingezeichnet sind, hier jedoch in einer beträchtlich gekürzten Form, denn in der praktischen Ausführung gehören zu jedem Arbeitsschritt eine Vielzahl von gleichgeformten Stromzuführungsdrähten, während hier jeweils nur drei solche Einheiten dargestellt sind;

Fig. 2 ein einzelnes Bauelement mit vollständig parallel verlaufenden Stromzuführungsdrähten

Fig. 3 ein einzelnes Bauelement mit Stromzuführungsdrähten entsprechend Fig. 1 im Arbeitsschritt E.

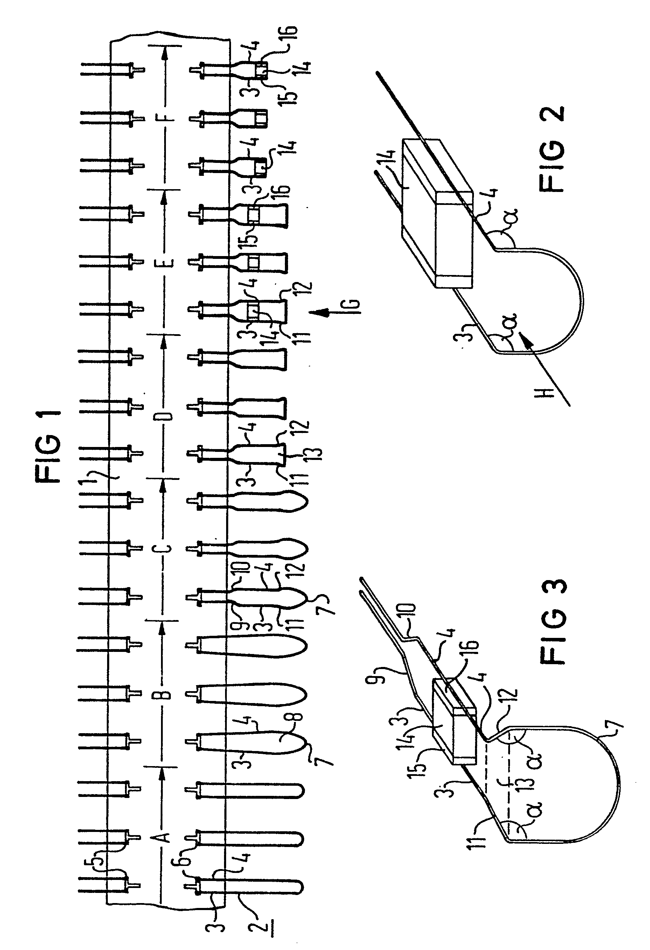

In Fig. 1 ist mit 1 der bandförmige Trägerstreifen bezeichnet. Die für ein elektrisches Bauelement bestimmten Stromzuführungsdrähte 3 und 4 sind in Schlitze 5 und 6 des Trägerstreifens 1 eingesetzt. Über den Rand des Transportträgers 1 ragt der Teil 2 der U-förmig ausgeführen, parallelen Stromzuführungsdrähte 3 und 4 hinaus. Das Einschieben dieser einstückigen U-Form erfolgt an der automatisch arbeitenden Anlage in an sich bekannter Weise, und zwar derart, dass – entsprechend dem Arbeitstakt der Montage-Anlage – von einer Vorratsrolle Draht abgezogen wird, der, auf die erforderliche Länge abgeschnitten, durch eine in der Ebene des Transportträgers 1 und senkrecht zur Transportrichtung wirkenden Metallzunge in die Schlitze eingeschoben wird.

Derartige Vorrichtungen sind beispielsweise in den US-Patentschriften 2 953 840 und 3 315 331 beschrieben.

Im weiteren Verlauf der Arbeitsschritte wird der seitlich über den Rand des Transportträgers 1 hinausragende Teil 2 zu einer Schlaufe 8 aufgebogen, wobei der Radius des U-Bogens 7 vergrössert wird und die Stromzuführungsdrähte 3, 4 einen sich vom Transportband 1 weg öffnenden Winkel zueinander bilden.

Danach wird diese Schlaufe 8 in der Nähe des Randes des Transportträgers 1 mit Knickungen 9 und 10 versehen; die einerseits dazu dienen, Lackumhüllungen des Bauelements längs der Drähte zu begrenzen, und andererseits für die Einhaltung des Rastermasses sorgen; gleichzeitig werden Knickungen 11, 12 erzeugt, so dass die Anschlussdrähte 3 und 4 wiederum parallel zueinander verlaufen, jedoch ggf. mit grösserem Abstand zueinander als bei dem hinausragenden Teil 2. Die Knickungen 11 und 12 bilden den Übergang zum U-Bogen 7.

Der U-Bogen 7 wird dann aus der Ebene des Transportträgers und der in ihm eingesetzten Stromzuführungsdrähte 3, 4 um einen Winkel α von etwa 90° abgebogen, so dass eine Einschiebehilfe 13 entsteht, die von den Knickungen 11 und 12 gebildet wird (Fig. 3).

Es bereitet nun keine Schwierigkeiten, das Bauelement 14 in Richtung des Pfeils G zwischen die Stromzuführungsdrähte 3 und 4 einzuschieben, denn die Einschiebehilfe 13 berücksichtigt Schwankungen in den Abmessungen der Länge oder Dicke des Bauelements. Der federnde Halt wird einerseits dadurch gewährleistet, dass die Stromzuführungsdrähte 3 und 4 in den Schlitzen 5 und 6 des Transportträgers stecken und andererseits dadurch, dass der aus der Ebene abgebogene U-Bogen 7 nach wie vor vorhanden ist, der bewirkt, dass die Stromzuführungsdrähte 3 und 4 im Bereich der Knickungen 11 und 12 mit einer gewissen Vorspannung aufeinander zustreben, die entsteht, wenn das Bauelement zwischen die Stromzuführungsdrähte eingeschoben worden ist, wie es aus Fig. 3 hervorgeht.

Im weiteren Arbeitsschritt E erfolgt auch noch das Verlöten der metallischen Stromzuführungsbelegungen 15 und 16 des Bauelements 14 mit den Stromzuführungsdrähten 3 und 4, und zwar vorzugsweise durch Schwallötung, die an sich bekannt ist und darin besteht, dass aus einem flüssigen Lötbad ein Strahl aus Lot herausgefördert wird, der an den miteinander zu verlötenden Teilen vorbeigeführt wird und wiederum in das Lotbad zurückkehrt.

Im darauffolgenden Arbeitsschritt F werden der verbindende U-Bogen 7 zusammen mit den Knickungen 11 und 12 und Teilen der Stromzuführungsdrähte 3 und 4 in der Nähe des Bauelements 14 abgetrennt, so dass eine elektrische Verbindung zwischen den Stromzuführungsbelegungen 15 und 16 (die als Lötanschlüsse dienen) nicht mehr besteht. Die elektrischen Bauelemente 14 werden dann in an sich bekannter Weise auf ihre elektrischen Werte geprüft, ggf. umhüllt und anderweitig fertiggestellt, beispielsweise verpackt.

Die Ausführungsform nach Fig. 2 zeigt, dass auch das blosse Abbiegen des Verbindungsbügels zwischen den Stromzuführungsdrähten 3, 4 ohne Knickungen 11, 12 (Fig. 3) um den Winkel α möglich ist. Zum Einschieben des Bauelements 4 müssen die Drähte 3 und 4 dann z.B. mit einem Keil etwas gespreizt werden. Dennoch kann das Bauelement 14 in Richtung des Pfeiles H zwischen die Drähte 3 und 4 eingeschoben werden.

Durch die vorliegende Erfindung ist die ihr zugrundeliegende Aufgabe in voll befriedigender Weise gelöst; insbesondere konnte die Taktzeit erhöht werden, so dass die automatisch arbeitende Montage-Anlage nunmehr mit einer Taktgeschwindigkeit von 100 Takten/Minute betrieben werden kann.

Es ist selbstverständlich, dass die einzelnen Arbeitsgänge, wie Einschieben der Stromzuführungsdrähte 3, 4 in die Schlitze 5, 6 des Transportträgers 1, das Bilden der Schlaufe 8, die Erzeugung der Knickungen 9 bis 12, das Abbiegen des U-Bogens 7, das Einschieben der Bauelemente 14, das Verlöten der Bauelemente 14 mit den Stromzuführungsdrähten 3 und 4 sowie die nachfolgenden Arbeitsschritte jeweils gleichzeitig ablaufen, während die oben beschriebene Reihenfolge nur während der Einlaufphase der Montage-Anlage durchgeführt wird.

**Patentansprüche**

1. Verfahren zum Anbringen und Befestigen von parallel zueinander verlaufenden Stromzuführungsdrähten (3, 4) an gegenüber befindlichen Seitenflächen (15, 16) elektrischer Bauelemente (14), indem zunächst in einen mit Schlitzen (5, 6) versehenen bandförmigen Transportträger (1) einer automatisch arbeitenden Montage-Anlage fortlaufend für je ein Bauelement (14) bestimmte, einstückig in U-Form ausgeführte Stromzuführungsdrähte (3, 4) derart eingeschoben werden, dass die beiden Drahtschenkel (3, 4) und der sie verbindende U-Bogen (7) der U-Form seitlich über den Rand des Transportträgers (1) hinausragen, danach das Bauelement (14) zwischen den Drahtschenkeln (3, 4) eingeklemmt und dann mit ihnen verlötet wird, anschliessend der die beiden Drahtschenkel (3, 4) der U-Form verbindende U-Bogen (7) abgetrennt wird und die Bauelemente (14) mit den Stromzuführungsdrähten (3, 4) geprüft, ggf. umhüllt und fertiggestellt werden, gekennzeichnet durch folgenden Verfahrensschritt:

Der seitlich über den Rand des Transportträgers (1) hinausragende Teil (2) der U-förmig ausgeführten parallelen Stromzuführungsdrähte (3, 4) einschliesslich des U-Bogens (7) wird im dem Einschieben in die Schlitze (5, 6) des Transportträgers (1) folgenden Arbeitsschritt zu einem Teil derart um einen Winkel (α) von etwa 90° abgebogen, dass der andere Teil der beiden Drahtschenkel (3, 4) in der bisherigen Ebene verbleibt und auf diese Weise das in Richtung der Stromzuführungsdrähte (3, 4) und in der Ebene des Transportträgers (1) erfolgende Einschieben des Bauelements (14) ermöglicht wird und erst dann mit dem Arbeitsschritt des Verlötens fortgefahren wird.

2. Verfahren nach Anspruch 1, gekennzeichnet durch folgende Verfahrensschritte:

a) Der seitlich über den Rand des Transportträgers (1) hinausragende Teil (2) der U-förmig ausgeführten, parallelen Stromzuführungsdrähte (3, 4) einschliesslich des U-Bogens (7) wird im dem Einschieben (A) in die Schlitze (5, 6) des Transportträgers (1) folgenden Arbeitsschritt (B) derart aufgebogen, dass der Radius des U-Bogens (7) vergrössert wird und die Drahtschenkel (3, 4) zueinander einen sich öffnenden Winkel bilden, so dass eine Schlaufe (8) entsteht.

b) Beim folgenden Arbeitsschritt (C) wird jeder Drahtschenkel (3, 4) im Bereich der Schlaufe (8) mit je zwei Knickungen (9, 10 und 11, 12) versehen, so dass die Drahtschenkel (3, 4) im wesentlichen wieder parallel verlaufen, das erste Paar Knickungen (9, 10) etwa in der Nähe des Randes des Transportträgers (1) sich befindet und das zweite Paar Knickungen (11, 12) den Übergang zum U-Bogen (7) bildet.

c) Beim folgenden Verfahrenschritt (D) wird der U-Bogen (7) derart um einen Winkel (α) von etwa 90° abgebogen, dass das zweite Paar Knickungen (11, 12) in seiner bisherigen Ebene verbleibt und auf diese Weise eine in Richtung der Stromzuführungsdrähte (3, 4) sich verjüngende Einschiebehilfe (13) bildet.

d) Beim nächsten Verfahrensschritt (E) werden die Bauelemente (14) zwischen die Drahtschenkel (3, 4) eingeschoben und in an sich bekannter Weise mit ihnen verlötet.

e) Beim folgenden Arbeitsschritt (F) wird der verbindende U-Bogen (7) zusammen mit dem zweiten Paar Knickungen (11, 12) und Teilen der Drahtschenkel (3, 4) in der Nähe des Bauelements (14) abgetrennt.

f) Anschliessend werden die Bauelemente (14) mit den Stromzuführungsdrähten (3, 4) in an sich bekannter Weise geprüft, gg. umhüllt und fertiggestellt.

## Claims

1. A method of applying and securing current supply wires (3, 4), which run parallel to one another, to opposite side surfaces (15, 16) of electrical components (14), in which one-piece U-shaped current supply wires (3, 4), which are designed for a particular component (14), are first continuously inserted into a ribbon-shaped transport carrier (1), provided with slots (5, 6), of an automatically-operating assembly device, in such a way that the two wire limbs (3, 4) and the connecting U-bend (7) of the U-formation, protrude laterally over the edge of the transport carrier (1), the component (14) is subsequently clamped between the wire limbs (3, 4) and then soldered thereto, the U-bend (7), which connects the two wire limbs (3, 4) of the U-formation, is subsequently severed and the components (14) with the current supply wires (3, 4) are tested, and, if desired, encased and finished, characterised by the following method step: the part (2) of the U-shaped parallel current supply wires (3, 4), which protrudes laterally over the edge of the transport carrier (1), including the U-bend (7) is bent in part through an angle (α) of about 90° in the operating step which follows insertion into the slots (5, 6) of the transport carrier (1), in such a way that the other part of the two wire limbs (3, 4) remains in the original plane, and in this way, the insertion of the component (14), which is carried out in the direction of the current supply wires (3, 4) and in the plane of the transport carrier (1), is rendered possible, and only then is the operating step of soldering begun.

2. A method as claimed in Claim 1, characterised by the following steps:

a) the part (2) of the U-shaped parallel current supply wires (3, 4), which protrudes laterally over the edge of the transport carrier (1), including the U-bend (7), is bent in the operating step (B), which follows insertion (A) into the slots (5, 6) of the transport carrier (1), in such a way that the radius of the U-bend (7) is increased and the wire limbs (3, 4) form an opening angle relative to one another, so that a loop (8) is formed

b) in the following operating step (C), each wire limb (3, 4) is provided with two kinks (9, 10 and 11, 12) in the region of the loop (8), so that the wire limbs (3, 4) essentially extend parallel again, the first pair of kinks (9, 10) being located approximately in the vicinity of the edge of the transport carrier (1) and the second pair of kinks (11, 12) formig the transition to the U-bend (7);

c) in the following process step (D), the U-bend (7) is bent through an angle (α) of approximately 90° in such a way that the second pair of kinks (11, 12) remains in its previous plane and thus forms an aid to insertion (13) which tapers in the direction of the current supply wires (3, 4);

d) in the next process step (E), the components (14) are inserted between the wire limbs (3, 4) and are soldered thereto in a manner known per se;

e) in the following operating step (F), the connecting U-bend (7), together with the second pair of kinks (11, 12) and parts of the wire limbs (3, 4), is severed in the vicinity of the component (14);

f) subsequently, the components (14), with the current supply wires (3, 4), are tested, if necessary encased in known manner, and finished.

## Revendications

1. Procédé pour installer et fixer des fils d'alimentation (3, 4) parallèles les uns aux autres à des surfaces latérales (15, 16) disposées en vis-à-vis, selon lequel on introduit tout d'abord de façon continue des fils d'alimentation en courant (3, 4) prévus pour différents composants (14) et réalisés d'un seul tenant en forme de U, dans un convoyeur en forme de bande (1) muni de fentes (5, 6), d'une installation de montage à fonctionnement automatique, de telle sorte que les deux branches de fil (3, 4) et le coude (7) en forme de U, qui les relie, font saillie latéralement au-delà du bord du convoyeur (1), qu'on serre ensuite le composant (14) entre les branches (3, 4) des fils et qu'on le soude alors à ces branches, qu'on coupe ensuite les deux branches (3, 4) des fils (1) du coude en forme de U (7), qui les relie, et qu'on contrôle les composants (14) munis des fils d'alimentation en courant (3, 4), et qu'éventuellement on les enveloppe et on en parachève la finition, caractérisé par la phase opératoire suivante:

on coude, pour une part, sur un angle (α) d'environ 90° la partie (2) qui fait saillie latéralement au-delà du bord du convoyeur (1) des fils parallèles d'alimentation en courant (3, 4), réalisés en forme de U, y compris le coude en U (7), au cours de la phase opératoire intervenant à la suite de l'insertion des fils dans les fentes (5, 6) du convoyeur (1), en formant une partie des deux branches (3, 4) du fil reste dans le plan où elles se trouvaient, et de cette manière l'insertion du composant (14), qui s'effectue en direction des fils d'alimentation en courant (3, 4) et dans le plan du convoyeur (1), devient possible et la poursuite du travail avec la phase opératoire de soudage n'intervient qu'ensuite.

2. Procédé suivant la revendication 1, caractérisé par les phases opératoires suivantes:

a) on replie la partie (2), qui fait saillie latéralement au-delà du bord du convoyeur (1), des fils parallèles d'alimentation en courant (3, 4) réalisés en forme de U, y compris le coude en U (7), pendant la phase opératoire (B) intervenant à la suite de l'insertion (A) des fils dans les fentes (5, 6) du convoyeur (1), en sorte que le rayon du coude en U (7) est augmenté et que les branches (3, 4) des fils forment entre elles un angle d'ouverture tel qu'on obtient une boucle (8);

b) lors de la phase opératoire (C) suivante, on réalise dans chaque branche (3, 4) des fils, au voisinage de la boucle (8), deux coudes (9, 10, 11, 12) de telle sorte que les branches (3, 4) des fils sont à nouveau sensiblement parallèles entre elles, que le premier couple de coudes (9, 10) se situe au voisinage du bord du convoyeur (1) et que le second couple de coudes (11, 12) forme la jonction avec le coude en U (7);

c) lors de la phase opératoire (D) suivante, on replie le coude en U (7) sur un angle ($\alpha$) d'environ 90° de telle manière que le second couple de coudes (11, 12) reste dans le plan où il se trouvait et que l'on obtient de cette manière un agencement favorisant l'insertion et se rétrécissant en direction des fils d'alimentation en courant (3, 4);

d) lors de la phase opératoire (A) immédiatement suivante, on insère les composants (14) entre les branches (3, 4) des fils et on les soude entre eux de façon connue en soi;

e) lors de la phase opératoire (F) suivante, on sépare le coude en U de liaison (7) ainsi que les deux couples de coudes (11, 12) et les parties des branches (3, 4) des fils, à proximité du composant (14);

f) ensuite on contrôle de façon connue en soi les composants (14) munis des fils d'alimentation en courant (3, 4), et éventuellement les enveloppe et on en parachève la finition.

# FIG 1

# FIG 3

# FIG 2

0 030 024